# EUROPÄISCHE PATENTSCHRIFT

(11) **EP 1 136 289 B1**
(45) Veröffentlichungstag und Bekanntmachung des Hinweises auf die Patenterteilung: **08.09.2004**
(21) Anmeldenummer: 01102305.8
(22) Anmeldetag: 01.02.2001
(51) Int. Cl.: B60J 1/20

(54) **Heckscheibenrollo mit gefederten Rollen**
Roller blind for rear window with spring rollers
Store à enrouleur pour lunette arrière avec rouleaux à ressort

(30) Priorität: 24.03.2000 DE 10014760
(43) Veröffentlichungstag der Anmeldung: 26.09.2001
(73) Patentinhaber: BOS GmbH & Co. KG, 73760 Ostfildern (DE)
(72) Erfinder: Schlecht, Werner P., 71665 Vaihingen/Enz-Aurich (DE)
(74) Vertreter: Patentanwälte Rüger, Barthelt & Abel

(56) Entgegenhaltungen:
- EP-A- 0 221 573
- WO-A-00/07837
- DE-A- 19 922 586
- US-A- 4 836 263

## Beschreibung

Aus der DE 198 35 257 A1 ist ein Fensterrollo für Autoheckscheiben bekannt, bei dem die Rollobahn ausschließlich mittels zweier Aufspannhebel aufgespannt und gestützt gehalten wird. Die Hebel sind im Wesentlichen biegesteif und neben der Wickelwelle auf Zapfen gelagert, deren Achse rechtwinkelig zu der Achse der Wickelwelle liegt. Durch einen Federmotor wird die Wickelwelle in Aufwickelrichtung der Rollobahn vorgespannt, während die Hebel mit Hilfe eines Elektromotors hochgeschwenkt werden. In der eingefahrenen Stellung liegen die Hebel parallel zur Wickelwelle, während sie bei ausgefahrenem Rollo zu der Wickelwelle ebenfalls rechtwinkelig verlaufen.

Die Aufspannhebel sind zwar verhältnismäßig steif und auch steif gelagert, aber nicht so steif, als dass sie nicht ins Schwingen geraten können, wenn normale Fahrzeugerschütterungen auftreten. Um diese Schwingungen zu vermeiden, die insbesondere beim Ausfahren störend wären und zum Anschlagen der Zugstange an der Heckscheibe führen könnten, sind die Aufspannhebel derart geneigt, dass sie in der Nähe des Wegbereichsendes bei ausgefahrenem Rollo die Zugstange mit Führungskufen gegen die Scheibe drücken. Im unteren Bereich bewegen sich die Hebel und die Zugstange frei, was alleine auf Grund der Neigung der Heckscheibe und dem Abstand, den die Wickelwelle von der gekrümmten Heckscheibe einhalten muss, erzwungen wird.

Um eine Beschädigung der Heizdrähte an der Innenseite der Heckscheibe zu vermeiden, ist die Zugstange mit Führungselementen in Gestalt von kleinen Rollen oder Rädchen ausgestattet. Die Rädchen werden beim Einfahren des Rollos hinter die Kontur der Zugstange zurückgedrückt, damit beim eingefahrenen Rollo der Auslaufschlitz nahezu vollständig verschlossen ist.

Die Rollen sind bei dem bekannten Rollo starr gelagert sobald das Auszugsprofil des Rolloschlitz verlassen hat. Ihre Anpresskraft ergibt sich aus der jeweiligen Einbaugeometrie. Aufgrund von Toleranzen beim Einbau können nicht unerhebliche Schwankungen hinsichtlich der Anpresskraft auftreten.

Aus der DE 199 22 856 A1 ist ein Heckscheibenrollo bekannt, das einen grundsätzlich ähnlichen Aufbau hat, wie das zuvor erwähnte Fensterrollo. Die Betätigungselemente sind entweder einfache einarmige Hebel oder Kniehebel, die eine Zugstange tragen. Die Zugstange ist mit drehbaren Rollen versehen, die längs der Innenseite der Heckscheibe entlanglaufen sollen, ohne eine nennenswerte Reibkraft auf die Heizungsdrähte auszuüben. Damit die gewünschte Anpresskraft über ein verhältnismäßig langes Stück des Ausfahrweges erreicht werden kann, sind die unteren Arme der beiden Kniehebel jeweils mit parallel zueinander verlaufenden Blattfedern versehen. Hierdurch sind die Arme in Richtung senkrecht zu der, durch die aufgespannte Rollobahn definierten Ebene, biegsam.

Die DE 36 12 165 A 1 zeigt ein Heckscheibenrollo zur nachträglichen Montage auf einer Hutablage. Zu dem Rollo gehört ein im Querschnitt gesehen etwa dreieckförmiges Gehäuse, in dem die Wickelwelle drehbar gelagert ist. An der der Heckscheibe zugekehrten Flachseite des Gehäuses sind zwei Schwenkhebel drehbar gelagert, die dazu vorgesehen sind, die Rollobahn von der Wickelwelle abzuziehen und im aufgespannten Zustand zu halten. Die Schwenkhebel schwenken um Achszapfen, die rechtwinklig zu der Wickelwelle stehen.

An dem unteren Ende sind die Schwenkhebel plattenförmig gestaltet und liegen großflächig auf der betreffenden Gehäusefläche auf. Zum Ausgleich von Fertigungstoleranzen werden die Schwenkhebel mit den plattenförmigen Abschnitten durch Tellerfedern gegen die Gehäuseseite angedrückt. Zufolge der plattenförmigen Gestaltung der Betätigungshebel an der Lagerungsstelle entsteht eine großflächige Kontaktstelle, die ein Kippen der Betätigungshebel um eine Achse parallel zur Wickelwelle verhindert.

Ausgehend hiervon ist es Aufgabe der Erfindung ein Fensterrollo insbesondere für Heckscheiben zu schaffen, bei dem die Anpresskraft der Führungselemente weniger stark von den Einbautoleranzen abhängig ist.

Diese Aufgabe wird erfindungsgemäß mit dem Fensterrollo mit den Merkmalen der Ansprüche 1 oder 2 gelöst.

Bei dem neuen Fensterrollo sind Mittel vorgesehen, die den Führungselementen eine Nachgiebigkeit in Richtung senkrecht zu der Fensterscheibe des Fahrzeugs verleihen. Auf diese Weise kann die Anpresskraft, mit der die Rollen an der Scheibe anliegen relativ konstant gehalten werden, und zwar auch dann, wenn wegen der Einbautoleranzen die Lage der Wickelwelle gegenüber dem theoretischen Sollmaß abweicht und/oder wenn die Ebene in der die Betätigungselemente schwenken mit der Heckscheibe einen anderen als den theoretischen Sollwinkel einschließt.

Die Führungselemente können wahlweise als Rollen oder als Gleitkufen ausgeführt sein.

Die Mittel, die den Führungselementen die gewünschte Nachgiebigkeit in Richtung senkrecht zu der Scheibe verleihen können in unterschiedlicher Weise und an unterschiedlichen Orten ausgebildet sein. Eine Möglichkeit besteht darin, die Führungselemente an der Zugstange nachgiebig zu lagern. Zu diesem Zweck wird zweckmäßiger Weise ein kleines Gehäuse vorgesehen, in dem der Träger für das Führungselement beweglich untergebracht ist, beispielsweise in Gestalt eines Schiebers, der etwa senkrecht zu jener Ebene verschiebbar ist, die durch die aufgespannte Rollobahn definiert ist.

Eine andere Möglichkeit die erforderliche Nachgiebigkeit zu erreichen, besteht in einer entsprechenden Ausgestaltung des Lagers mit dem der jeweilige Aufspannhebel ortsfest gelagert ist. So kann zur Lagerung ein Zapfen mit einem Bund verwendet werden, der durch eine Bohrung hindurchführt, die von einer Anlagefläche oder Schulter umgeben ist. Der Zapfen kann wahlweise karosseriefest oder an dem Betätigungselement vorgesehen sein, während die Bohrung entweder in dem Aufspannhebel vorhanden ist oder in einem Rahmen, der auch die Wickelwelle lagert. Mit Hilfe einer vorzugsweise scheibenförmigen Feder beispielweise einer Teller- oder Wellfeder wird die Anlagefläche gegen den Bund des Zapfens angedrückt, wodurch eine Vorzugslage erzielt wird. Aufgrund entsprechender Dimensionierung des Durchmessers des Zapfens zu der Bohrung ergibt sich eine gewisse Kippmöglichkeit, wodurch das Betätigungselement nicht nur um die Achse des Zapfens herumgeschwenkt werden kann, sondern auch begrenzt in einer Ebene, die die Achse des Zapfens enthält.

Die Wickelwelle kann je nach Ausführungsform in einem Gehäuse untergebracht werden, wenn eine Aufbaulösung bevorzugt wird, oder an einem Rahmen gelagert werden, wenn die Wickelwelle beispielsweise unterhalb der Hutablage angeordnet wird. Im letzteren Falle enthält die Hutablage den Auslaufschlitz, durch den hindurch die Rollobahn ausfährt und die Betätigungselemente heraus schwenken.

Zum Antrieb des Rollos kann die Kombination aus einem Federantrieb und einem Elektroantrieb verwendet werden. Dabei fungiert der Federantrieb als Slave während die Lage der Zugstange durch den selbsthemmenden Elektromotor definiert wird. Der Elektromotor kann die Wickelwelle oder die Betätigungselemente antreiben, wobei der Federantrieb mit dem jeweils anderen Bauteil gekoppelt ist.

Als Betätigungselemente kommen einfache Hebel in Frage oder auch Kniehebel, die aus zwei Kniehebelstücken zusammengesetzt sind. In einem Falle wird eine gleitende Bewegung zwischen dem Betätigungselement und der Zugstange benötigt während im anderen Falle das zusätzliche Scharnier für eine Instabilität sorgt, oder auch als Mittel herangezogen werden kann, um die Nachgiebigkeit für die Führungselemente zu erzeugen.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen:
Fig. 1 ein in einem Kraftfahrzeug angeordnetes Fensterrollo im ausgefahrenen Zustand, in einer Ansicht von außerhalb des Fahrzeugs, stark schematisiert,
Fig. 2 das in der Zugstange gleitende freie Ende eines der Aufspannhebel des Fensterrollos nach Fig. 1,
Fig. 3 eines der Führungselemente mit dem zugehörigen Gehäuse im Augenblick des Durchtauchens durch den Auslaufschlitz, in einer stark schematisierten Seitenansicht,
Fig. 4 das Führungselement mit dem zugehörigen Gehäuse nach Fig. 3 kurz vor dem Berühren der Scheibe in einer Seitenansicht,
Fig. 5 die Anordnung nach Fig. 4, in einer geschnittenen Darstellung,
Fig. 6 das fußpunktseitige Lager eines der Aufspannhebel zum Aufspannen des Rollos, in einer Explosionsdarstellung und
Fig. 7 das Lager nach Fig. 6, im montierten Zustand.

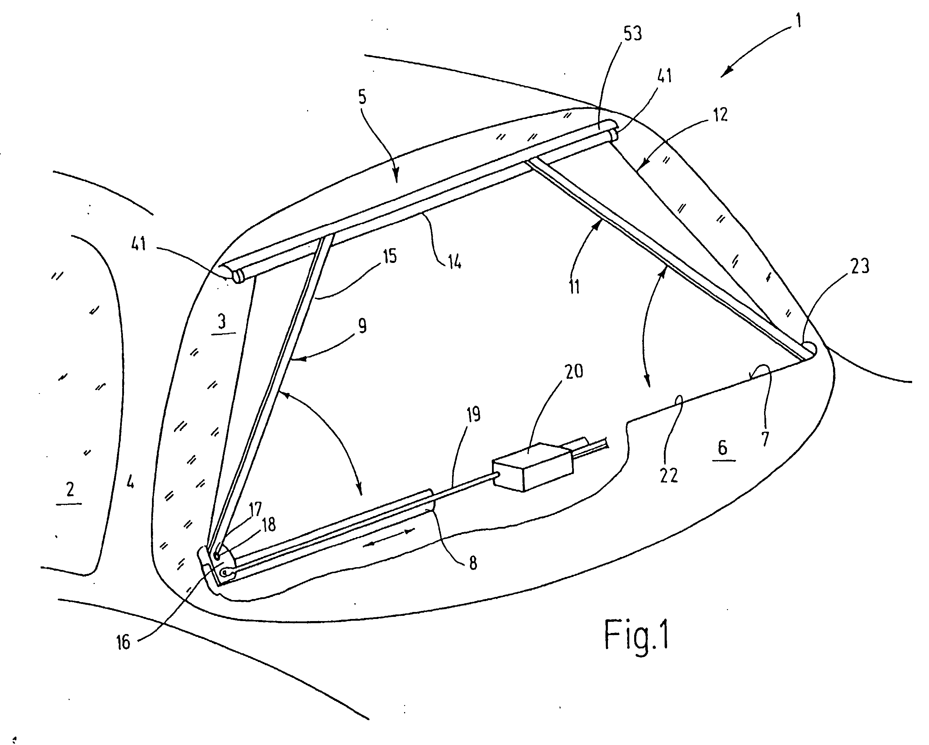

Fig. 1 zeigt in stark schematisierter Weise die Heckpartie eines Kraftfahrzeugs 1 in einer Ansicht von hinten. In der perspektivischen Darstellung ist ein linkes hinteres Seitenfenster 2 sowie ein Heckfenster 3 mit der eingesetzten, üblicherweise gekrümmten Fensterscheibe 4 zu erkennen. Vor der Innenseite der Fensterscheibe 4 befindet sich ein Fensterrollo 5, das im ausgefahrenen Zustand gezeigt ist.

Außerdem ist in Fig. 1 eine aufgebrochen veranschaulichte Hutablage 6 zu erkennen, in der ein über die Breite der Hutablage 6 sich erstreckender Auslaufschlitz 7 enthalten ist.

Zu dem Fensterrollo 5 gehören eine Wickelwelle 8, zwei Aufspannhebel 9 und 11, eine Rollobahn 12 sowie eine Zugstange 13.

Die Wickelwelle 8, die abschnittsweise in dem aufgebrochenen Teil der Hutablage 6 zu erkennen ist, ist unterhalb der Hutablage 6 mit nicht weiter gezeigten Lagereinrichtungen drehbar gelagert. Im Inneren der Wickelwelle 8 befindet sich ein Federmotor, der die Wickelwelle 8 ständig im Sinne eines Aufwickeins der Rollobahn 12 vorspannt. Die Wickelwelle 8 liegt horizontal etwa unterhalb des geraden Auslaufschlitzes 7 und zu diesem parallel.

Die Rollobahn 12 besteht aus einer glatten gelochten Kunststoff-Folie, die mit einer Kante an der Wickelwelle 8 befestigt ist und mit ihrer anderen dazu parallelen Kante 14 an dem Zugstab 13.

Die beiden Aufspannhebel 9 und 11 sind zueinander spiegelbildlich, so dass die Beschreibung für den Aufspannhebel 9 in sinngemäßer Weise auch für den Aufspannhebel 11 gilt. Der Aufspannhebel 9 ist ein zweiarmiger Hebel mit einem Hebelabschnitt 15 sowie einem Hebelabschnitt 16. An der Übergangsstelle zwischen den beiden Hebelabschnitten 15 und 16 befindet sich eine Lagerbohrung 17, mit deren Hilfe der Aufspannhebel 9 auf einem Lagerzapfen 18 schwenkbar gelagert ist. Der Lagerzapfen 18 ist an der Unterseite des weggebrochenen Teils der Hutablage 6 neben dem Auslaufschlitz 7 befestigt. Die Ausrichtung des Lagerzapfens 18 ist so gestaltet, dass der Hebelabschnitt 9 sich in einer Ebene bewegt, die etwa parallel zu der durch die Fensterscheibe 4 definierten Ebene liegt.

Der Aufspannhebel 9 kann aus einer Lage, in der der Hebelabschnitt 15 etwa parallel zu der Wickelwelle 8 verläuft, in eine Stellung überführt werden, in der er etwa parallel zu den seitlichen Begrenzungsrändern des Heckfensters 3 liegt.

Um den Aufspannhebel 9 zwischen diesen beiden Endlagen hin- und herzubewegen, ist der untere Hebelabschnitt 16 über eine Betätigungsstange 19 mit einem Antriebsmotor 20 verbunden. Die Betätigungsstange 19 liegt parallel zu der Wickelwelle 8 und ebenfalls unterhalb der Hutablage 6 zusammen mit der Antriebseinrichtung 20. Der Aufspannhebel 11 ist spiegelbildlich ausgeführt und wird über eine entsprechende Betätigungsstange gegenläufig zu dem Aufspannhebel 9 synchron bewegt.

Im aufgestellten Zustand ragen die beiden Hebelabschnitte 15 der Aufspannhebel 9 und 11, wie gezeigt, durch den Auslaufschlitz 7 nach oben, während sie im eingefahrenen Zustand unter der Hutablage 6 weitgehend verschwinden.

Der Auslaufschlitz 7 wird von zwei zueinander parallelen Schlitzrändern 22 und 23 begrenzt, die einen solchen Abstand voneinander haben, dass die beiden Aufspannhebel 9 und 11 ungehindert durchtreten können und auch von den Aufspannhebeln 9 und 11 die Rollobahn 12 herausgezogen werden kann.

Bei eingefahrenem Rollo wird der Auslaufschlitz 7 von der Zugstange 13 abgedeckt.

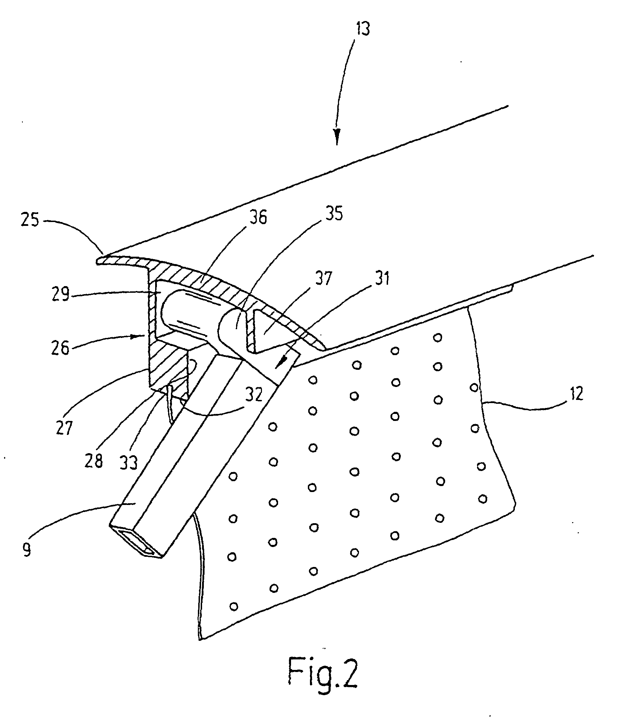

Die Verbindung des Aufspannhebels 9 mit der Zugstange 13 sowie deren Profil sind aus Fig. 2 zu erkennen.

Das Profil der Zugstange 13 setzt sich aus einer verhältnismäßig schmalen, zylindrisch leicht nach oben gewölbten Leiste 25 und einem nach unten führenden Mittelsteg 26 zusammen. Es hat somit eine etwa T-förmige Querschnittsgestalt, die über die Länge der Zugstange 13 unverändert ist. Die Breite der Leiste 25 ist so bemessen, dass sie bei eingefahrenem Fensterrollo 5 den Auslaufschlitz 7 überdeckt, wohingegen der Mittelsteg 26 nach unten durch den Auslaufschlitz 7 hindurch taucht. Die Krümmungsachse der Leiste 25 liegt parallel zu der Längserstreckung der Zugstange 13.

Der Mittelsteg 26 wird von zwei zueinander parallelen Seitenflächen 27 und 28 begrenzt, die auf der Unterseite der Leiste 25 senkrecht stehen.

Ausgehend von der Seitenfläche 28 führt in den Mittelsteg 26 eine im Querschnitt rechteckige Nut 29 hinein, die bis in die Nähe der Seitenwand 27 reicht. Diese Nut 29 läuft ebenfalls über die gesamte Länge der Zugstange 13 durch und dient als Führungsnut für ein Kopfstück 31 des Aufspannhebels 9.

Schließlich enthält der Mittelsteg in seiner Unterseite 32 eine Nut 33, in der die entsprechende Kante der Rollobahn 12, beispielsweise durch Verkleben verankert ist.

Das Kopfende 31 ist ein mehrfach abgewinkeltes Formteil, das mit einem nicht weiter erkennbaren Zapfen in dem rohrförmigen Hebel 9 steckt. Ausgehend von dem freien Ende des Hebels 9 bildet das Kopfstück 31 einen nach oben stehenden Fortsatz 35, der in einen zylindrischen Zapfen 36 übergeht. Der zylindrische Zapfen 36 erstreckt sich rechtwinklig zu der Längsachse des Hebelabschnittes 15 und ist gegenüber diesem seitlich ein Stück weit versetzt.

Der Zapfen 36 liegt in der Nut 39, wodurch eine verschiebliche Kupplung zwischen dem Aufspannhebel 9 und der Zugstange 13 erzeugt wird.

Damit der Zapfen 36 während der Betätigung des Fensterrollos 5 nicht ungewollt aus der Nut 29 freikommen kann, befindet sich im Abstand zu der Nut 29 eine nach unten führende Leiste 37, die an der Unterseite der Leiste 25 angeformt ist. Ihr Abstand von der Seitenfläche 28 entspricht der Dicke des Fortsatzes 35 gemessen in dieser Richtung.

Der Aufspannhebel 11 ist in gleicher, jedoch spiegelbildlicher Weise, ebenfalls in der Nut 29 geführt.

Falls aufgrund der Proportionen im eingefahrenen Zustand die Aufspannhebel 9 und 11 in der Nut 29 kollidieren würden, ist es auch möglich, zwei übereinander liegende Nuten 29 zu verwenden, wobei jede Nut für einen der Aufspannhebel vorgesehen ist.

Damit beim Ein- und Ausfahren die mit der Vorspannung gegen die Innenseite der Fensterscheibe 4 angedrückte Zugstange 13 die Heizdrähte nicht beschädigt, ist sie in der Nähe der beiden Enden mit Führungselementen 41 versehen. Die Führungselemente 41 sind beweglich gehaltert und stehen ab einem bestimmten Abstand der Zugstange 13 von dem Auslaufschlitz 7 über die der Heckscheibe 4 benachbarte Kante der Leiste 25 der Zugstange 3 vor, während sie in der anderen Stellung gegenüber deren Außenkontur zurückgedrückt sind.

Die Führungselemente 41 sind mit den Mitteln 42 versehen, die ihnen abgesehen von den mechanischen Endstellungen in jeder Zwischenstellung eine Beweglichkeit in Richtung zumindest angenähert senkrecht zu der Heckscheibe 4 verleihen. Zu den Mitteln gehört auch eine Federeinrichtung mit der die Führungselemente 41 in Richtung auf die Heckscheibe 4 zu vorgespannt sind.

In Einzelnen ist der Aufbau wie folgt:

Die Führungselemente 41 an den beiden Enden der Kopfleiste 25 sind zueinander spiegelbildlich ausgeführt, weshalb sich die Beschreibung auf eines der Führungselemente 41 beschränkt. Die Erläuterung gilt sinngemäß auch für das andere Führungselement 41 am jeweils anderen Ende.

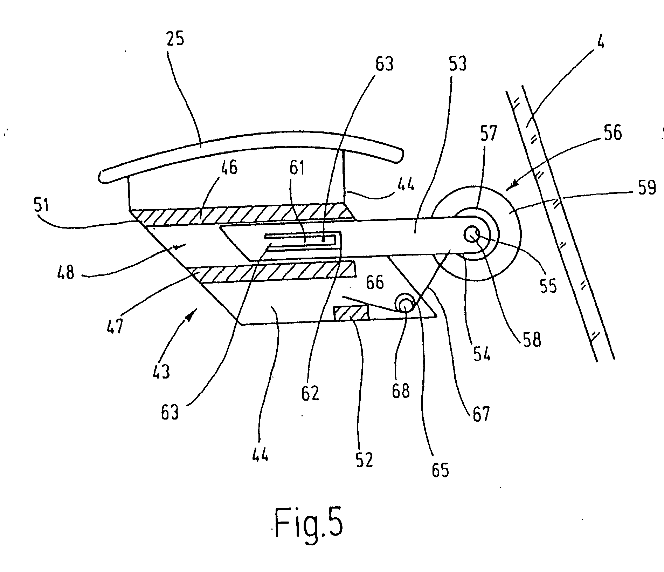

Die bereits zuvor erwähnten Mittel 42, die dazu dienen dem Führungselement 41 die erforderliche Nachgiebigkeit zu verleihen, umfassen ein an der Kopfleiste 25 befestigtes aus Kunststoff gespritztes Gehäuse 43, das in Fig. 5 im Schnitt gezeigt ist. Das Gehäuse 43 setzt sich aus zwei zu einander parallel und im Abstand verlaufenden Seitenwänden 44 und 45 sowie zwei einstückig damit verbunden querverlaufenden Querwänden 46 und 47 zusammen. Von den Seitenwänden 44, 45 sowie den Querwänden 46, 47 wird ein im Querschnitt rechteckiger Führungskanal 48 begrenzt, der von einer vorderen Stirnseite 49 des Gehäuses bis zu einer hinteren Stirnseite 51 reicht.

Mit den Seitenwänden 44, 45 ist das Gehäuse 43 an der Unterseite der Kopfleiste 25 befestigt. Die Anordnung ist dabei so getroffen, dass der Führungskanal 48 in einem Abstand von der Unterseite der Kopfleiste 25 verläuft, der sich aus der weiter unten angegebenen Funktionsbeschreibung ergibt.

Außerdem sind die Seitenwände 44 unterhalb der unteren Querwand 47 ebenfalls ein Stück weit verlängert und am unteren Ende des verlängerten Bereiches über einen schmalen Quersteg 52 zusätzlich miteinander verbunden.

In dem Führungskanal 48, der etwa parallel zu der Sehnenerstreckung der zylinderförmig nach oben bombierten Kopfleiste 25 verläuft, steckt ein Schieber 53, dessen Außenabmessungen an den Führungskanal 48 angepasst sind. Der Schieber 53 ist rohrförmig und endet an seinem der Heckscheibe 4 benachbarten Ende in zwei zueinander parallelen Schenkeln 54, von denen wegen der Darstellung lediglich der dem Betrachter zugekehrte Schenkel 54 zu erkennen ist. In den beiden Schenkeln 54 sind miteinander fluchtende Bohrungen 55 enthalten, die als Achsbohrung für eine Rolle 56 dienen, die das Führungselement 41 bildet.

Die Rolle 56 besteht aus einer Nabe 57 mit beidseits angespritzten Achszapfen 58, auf der ein Reifen 59 aufgezogen ist. Um zu verhindern, dass der Reifen 59 an der Innenseite der Schenkel 54 streift, kann der Achszapfen zwischen der Innenseite des Schenkels 54 und der benachbarten Stirnseite der Nabe 57 einen größeren Durchmesser aufweisen, so dass hierdurch ein Abstandshalter entsteht, der gleichzeitig dafür sorgt, dass die Nabe 57 mit dem Reifen 59 zwischen den Schenkeln 54 zentriert wird. Die Drehachse der Rolle 56 liegt etwa parallel zu der Heckscheibe 4, damit sie auf der Innenseite der Heckscheibe 4 abrollen kann.

Im Bereich des Führungskanals 48 ist in den Seitenwänden des Schiebers 53 je eine Federzunge 61 einstückig angeformt, wie dies auf der dem Betrachter zugekehrten Seite des Schiebers 53 zu erkennen ist. Die Federzunge 61 erstreckt sich im Wesentlichen in einer rechteckigen Ausnehmung 62. Sie ist an dem der Rolle 56 abliegenden Ende der Öffnung 62 bei 53 mit dem Führungsschieber 53 einstückig verbunden. Im Abstand zu ihrem freien Ende weist die Zunge 61 eine Kante 63 auf, in der Weise, dass dort eine rechteckige Stufe entsteht, die bezogen auf den Führungsschieber 53 nach außen und in Richtung auf die Rolle 56 zeigt.

Eine weitere, gleich ausgebildete, jedoch spiegelbildliche Zunge 61 ist auf der nicht sichtbaren Seite des Führungsschiebers 53 vorhanden. Diese beiden Zungen 61 dienen als Bewegungsanschläge für den Führungsschieber 53 und wirken mit rechteckigen Öffnungen 64 zusammen, die in den beiden Seitenwänden 44 und 45 auf der Höhe der Zungen 61 enthalten sind.

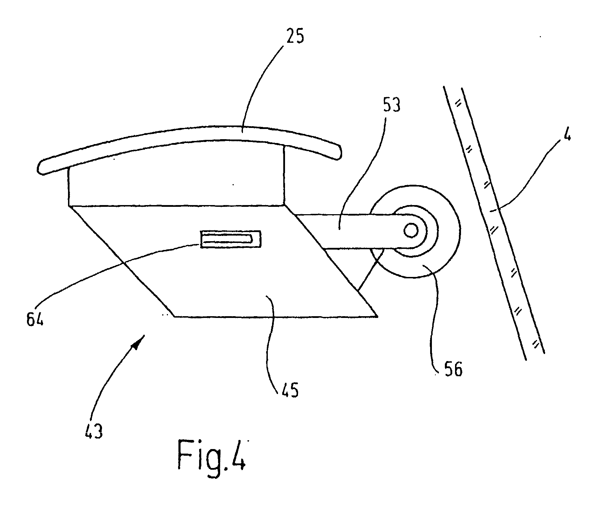

Um den Führungsschieber 63 zusammen mit der daran gelagerten Rolle 56 in Richtung auf die Heckscheibe 4 vorzuschieben sind zwei Schenkelfedern 65 vorhanden, von denen wegen der abgeschnittenen Darstellung in Fig. 4 lediglich die eine zu erkennen ist. Die Schenkelfeder 65 besteht aus einem schraubenförmig gewickelten Draht mit zwei Schenkelenden 66 und 67. Sie sitzt mit ihrem gewickelten Teil auf einem Zapfen 68, der an der Innenseite der Seitenwand 44 unten und zwar zwischen dem Steg 52 und der vorderen Stirnseite 49 des Gehäuses einstückig ausgebildet ist. Ein weiterer Zapfen 68 befindet sich an der Innenseite der Seitenwand 45 und fluchtet mit dem gegenüberliegenden Zapfen entsprechend dem Zapfen 68. Auch auf ihm sitzt eine Schenkelfeder, die genauso ausgebildet ist wie die Schenkelfeder 65.

Die Schenkelfeder 65 stützt sich mit dem Schenkel 66 auf dem Steg 52 wie gezeigt ab, während ihr anderer Schenkel 67 gegen den Achszapfen 58 der Rolle 56 anliegt. Dazu ragt der Schenkel 67 in den Spalt zwischen der Rolle 56 und der Innenseite des Lagerschenkels 54.

Die beiden Schenkelfedern 65 sind bestrebt den Führungsschieber 53 zur Stirnseite 59 aus dem Führungskanal 48 herauszuziehen. Dieser Bewegungshub wird begrenzt, wenn die Stufe 63 an der Vorderkante der rechteckigen Ausnehmung 64 anstößt. Beim praktischen Ausführungsbeispiel beträgt der mögliche Hub circa 12 mm. Aufgrund der besonderen Ausbildung der Schenkelfeder 65 und der relativen Lage des Zapfens 68 zu der voll ausgeschobenen Rolle 56 ergibt sich eine negative Federkennlinie.

Die Vorschubkraft mit der die Rolle 56 in Richtung auf die Heckscheibe 4 vorgeschoben wird, ist am größten, wenn der Schenkel 65 etwa rechtwinklig zu der Längserstreckung des Führungsschiebers 53 liegt. Die Vorschubkraft wird kleiner, wenn ausgehend von dieser Stelle der Führungsschieber 53 weiter eingeschoben wird. Die negative Federkennlinie verhindert eine unnötig große Anpresskraft gegen die Kante 22 des Auslaufschlitzes 8, wenn das Heckscheibenrollo 5 eingezogen ist.

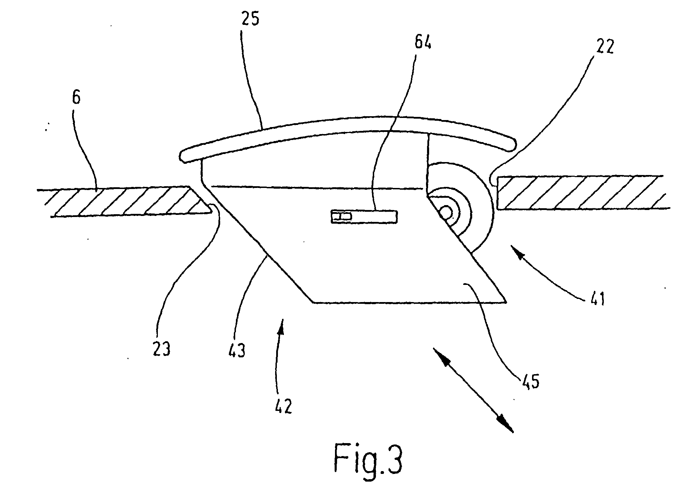

Es versteht sich, dass die Gestaltung der Seitenwände 44, 45, die bei der gezeigten Ausführungsform etwa parallelogrammförmig ist, sich nach den speziellen Einbauverhältnissen richtet. Die Kanten an der vorderen und der hinteren Stirnseite 49 und 51 liegen etwa parallel zur Bewegungsebene, in der sich die Zugstange 14 von dem Auslaufschlitz 8 entfernt. Außerdem können die beiden Querwände 46 und 47 an der vorderen Stirnseite 59 gegenüber der vorderen Stirnseite 49 zurückspringen oder V-förmig ausgespart sein, damit die Rolle 56 möglichst tief in das Gehäuse 43 zurückgeschoben werden kann, wie dies in Fig. 3 zu erkennen ist.

Im Einzelnen ist die Funktionsweise wie folgt:

Im eingefahrenen Zustand des Heckscheibenrollos 5 liegt die Kopfleiste 25 der Zugstange 14 auf der Oberseite der Hutablage 6 beidseits des Auslaufschlitzes 8 auf. Der Auslaufschlitz 8 ist auf diese Weise von der Kopfleiste 25 vollständig abgedeckt. In dieser Betriebsstellung liegt die Rolle 56 an der der Heckscheibe 4 benachbarten Kante 22 des Auslaufschlitzes an und zwar entweder unmittelbar an der Schlitzkante 22 selbst oder an einer ein Stück weit nach unten reichenden Verlängerung, je nachdem wie die Relation zwischen der Dicke der Hutablage 6 und dem Abstand der Rolle 56 zu der Unterseite der Kopfleiste 25 aussieht.

Mit Hilfe der beiden Schenkelfedern 65 wird die Rolle 56 in Anlage zu der Hutablage 6 gehalten.

In der vollständig eingefahrenen Stellung liegen außerdem die beiden Aufspannhebel 9 und 11 parallel zu der Wickelwelle unterhalb des Auslaufschlitzes 8. Von dem Heckscheibenrollo 5 ist nach außen lediglich dessen Kopfleiste 25 sichtbar.

Wenn ausgehend von dieser Betriebsstellung das Heckscheibenrollo 5 ausgefahren werden soll, wird der Elektromotor 20 in Gang gesetzt, der daraufhin über ein Getriebe die beiden Zugstangen 19 aufeinander zu bewegt. Hierdurch wird der Aufspannhebel 9, bezogen auf die Darstellung in Fig. 1, im Gegenuhrzeigersinn und der Aufspannhebel 11 im Uhrzeigersinne um den jeweiligen Lagerzapfen 18 herumgeschwenkt. Die Aufspannhebel 9 und 11 klappen aus dem Auslaufschlitz 8 hervor und heben die Zugstange 14 an. Bei dieser Bewegung läuft die Rolle 56 an der Kante 22 nach oben und fährt, sobald sie den Kontakt mit der Kante 22 verloren hat, vollständig aus in die in den Fig. 4 und 5 gezeigte Stellung.

Diese Stellung behalten die beiden Rollen 56 an den Enden der Zugstange 14 über eine beträchtliche Strecke des Bewegungshubs der Zugstange 14 bei. Die Ebene, in der sich die Aufspannhebel 9 und 11 bewegen, steht steiler als es der Neigung der Heckscheibe 4 entspricht, weil sich die Wickelwelle im Abstand von der Heckscheibe 4 befinden muss. Erst im oberen Ende des Hubbereiches kommen die Rollen 56 mit der Innenseite der Heckscheibe 4 in Berührung, so dass eine Abstützung der Zugstange 4 gegenüber der Innenseite der Heckscheibe 4 zustande kommt. Dadurch werden Schwingbewegungen bzw. deren Anschlagen an der Heckscheibe aufgrund der Fahrzeugerschütterungen verhindert.

Wegen des unterschiedlichen Neigungswinkels der Heckscheibe zu der Bewegungsebene der Aufspannhebel 9 und 11 wird sich die Zugstange 14 zunehmend der Innenseite der Heckscheibe 4 nähern und es werden dabei die Rollen 56 gegen die Wirkung der Schenkelfedern 65 in das Gehäuse 43 zurückgedrückt.

Die Kraft, die zwischen der Zugstange 14 und der Heckscheibe 5 wirksam ist, ergibt sich bei der erfindungsgemäßen Ausgestaltung ausschließlich aufgrund der Härte der Schenkelfedern 65.

Unvermeidliche Einbau- und Karosserietoleranzen werden von dem Bewegungshub, den die Rolle 56 abgefedert vollführen kann, ausgeglichen, wobei die Anpresskraft der Rollen 56 nahezu konstant ist. Sie muss lediglich so groß sein, dass sie übermäßige Schwingbewegungen der Aufspannhebel 9 und 11 in Fahrzeuglängsrichtung unterdrückt, damit die Zugstange 14, die an der Oberkante der Heckscheibe 4 vorhandenen Aufnahmetaschen finden kann.

Bei Einfahren des Heckscheibenrollos 5 werden nach etwa 10% bis 20% des Bewegungshubs die Rollen 56 den Kontakt mit der Innenseite der Heckscheibe 4 verlieren und wiederum in die Stellung nach den Figuren 4 und 5 zurückkehren. Am Schluß der Einfahrbewegung läuft die Rolle 56 auf den Rand 23 des Auslaufschlitzes 8 auf und wird gegen die Wirkung der Schenkelfeder 65 zurückgedrückt.

Im vollständig eingefahrenen Zustand steht der Führungsschieber 53 bezogen auf die Figuren am linken Ende seines Bewegungshubs. In dieser Stellung liegen die beiden Schenkel 66 und 67 in einem spitzen Winkel zueinander, so dass sie nur noch eine sehr kleine Ausschubkraft erzeugen. Die Rolle 56 liegt nur mit geringer Kraft an dem Schlitzrand 22 an.

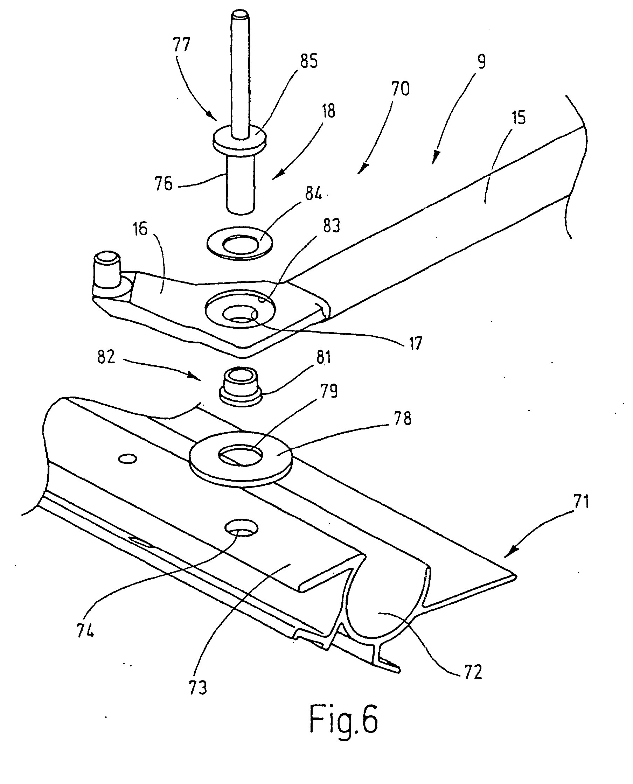

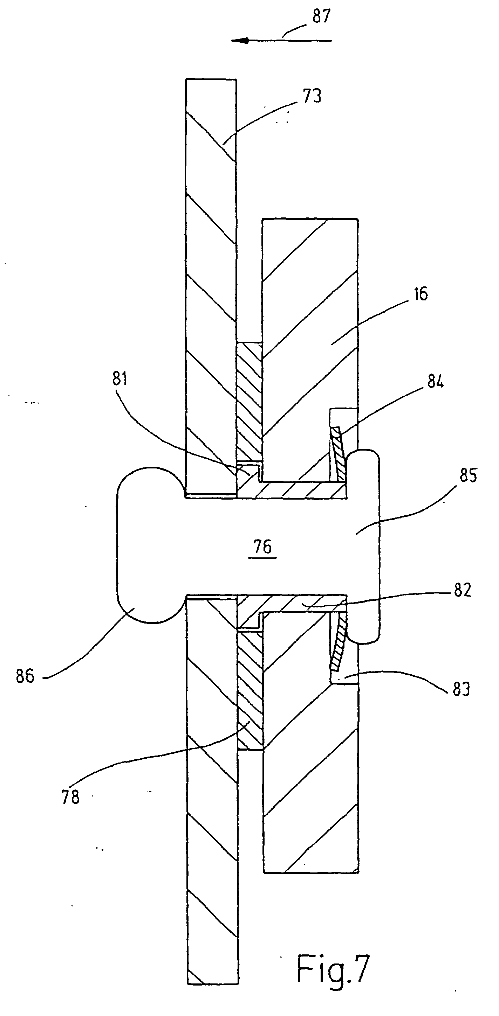

Eine andere Möglichkeit die gewünschte Nachgiebigkeit zu erhalten, besteht in der Art und Weise wie der Aufspannhebel 9 bzw. 11 gelagert ist. Ein hierfür geeignetes Lager 70 ist in Fig. 6 und 7 gezeigt.

Ein Strangpressprofil 71, das als Rahmen bzw. Gehäuse zur Lagerung der Wickelwelle dient, ist mit einer entsprechenden durchgehenden profilierten Nut 72 für die Wickelwelle versehen. Im Anschluss an diese Nut geht das Profil 71 in eine gerade Leiste 73 über, die in der Nähe jeder ihrer Enden eine Lagerbohrung 74 enthält. Wegen der abgebrochenen Darstellung ist in Fig. 6 lediglich eine der beiden Bohrungen zu erkennen. In der Lagerbohrung 74 steckt der Lagerzapfen 18, der von einem Schaft 76 eines Blindniets 77 gebildet wird.

Um ein Kippen des Aufspannhebels 9 quer zu seiner eigentlichen Schwenkebene zu ermöglichen, liegt zwischen dessen Rückseite und der Vorderseite der Leiste 73 eine Beilagscheibe 78, deren Bohrung 79 derart bemessen ist, dass sie einen Bund 81 einer Bundbuchse 82 aufnehmen kann. Die axiale Dicke des Bundes 81 ist etwas geringer als die Dicke der Beilagscheibe 78.

Die Lagerbohrung 17 in dem Aufspannhebel 9 ist von einer Flachsenkung 83 umgeben, die als Aufnahmeraum für eine Tellerfeder 84 dient.

Die Montage der gezeigten Anordnung geschieht wie folgt:

Mit der konvexen Seite voraus wird die Tellerfeder 84 auf den Schaft 76 des Blindniets 77 aufgeschoben, bis sie an dessen Nietkopf 85 anliegt. Diese Anordnung wird von der dem Profil 71 abliegenden Seite in die Lagerbohrung 17 eingeführt und es wird von der Rückseite her auf den Schaft 76 die Bundbuchse 82 aufgeschoben. Sodann wird über den Bund 81 die Beilagscheibe 78 aufgeschoben. Schließlich wird der Schaft 76 mit den darauf aufgefädelten Bauteilen in die Bohrung 74 eingeschoben. Der Blindniet 77 wird bekannter Weise unter Ausbildung eines Schließkopfes 86 an der Rückseite der Leiste 73 vernietet. Beim Vernieten wird der Nietkopf 85 gegen die freie Stirnseite der Bundbuchse 82 gezogen, wie dies Fig. 7 erkennen läßt. Hierbei wird die Tellerfeder 84 gespannt.

Das Maß um das die Tellerfeder 84 gespannt wird, ergibt sich aus dem Axialspalt zwischen dem Boden der Flachsenkung 83 und der benachbarten Schulterfläche des Nietkopfes 85. Dieser Abstand wird durch die Länge der Bundbuchse 82 bestimmt, die sich mit ihrem Bund 81 an der Vorderseite der Leiste 73 abstützt, wenn der Schließkopf 86 erzeugt ist. Wie Fig. 7 erkennen läßt, hat wegen der Dicke der Beilagscheibe 78, der Aufspannhebel 9 gegenüber dem Bund 81 ein geringes Axialspiel.

Es versteht sich, dass die Festigkeit des Niets 77 entsprechend hoch sein muss, weshalb es sich um einen Stahlniet handelt.

Die Wirkungsweise der gezeigten Anordnung ist wie folgt:

Durch die Tellerfeder 84, an deren Stelle auch eine Wellfederscheibe verwendet werden kann, wird der Aufspannhebel 9 gegen die Beilagscheibe 78 angepresst. Beim Ausfahren wird er sich deswegen in einer Ebene bewegen, die zu der Ebene parallel ist, die die Vorderseite der Leiste 73 definiert. Sobald im oberen Bereich des Ausfahrhubs die starr gelagerten Rollen 56 mit der Scheibe 4 in Eingriff kommen, wird der Aufspannhebel 9 wie durch einen Pfeil 87, wie in Fig. 7 gezeigt, zurückgedrückt. Er vollführt dabei eine Kippbewegung um die obere Kante der Beilagscheibe 78, während die Tellerfeder 84 bestrebt ist, dieser Kippbewegung entgegen zu wirken. Bei entsprechender Bemessung der Härte der Tellerfeder 84, deren Vorspannung aufgrund des Einbaus und des Durchmessers der Beilagscheibe 78 bemessen wird, kann eine gewünschte Nachgiebigkeit erreicht werden.

Bei dieser Kippbewegung wirkt der oben liegende Bereich des Randes der Beilagscheibe 78 als Kippachse. Beim Kippen hebt die Rückseite von der übrigen Fläche der Beilagscheibe 78 ab.

Unter starr gelagerten Rollen sind auch solche Rollen zu verstehen, die die Rollen der in der Beschreibungseinleitung zitierten DE 198 35 257 A1 hinter das Lichtraumprofil der Kopfleiste 25 zurückgezogen werden können, im ausgefahrenen Zustand jedoch starr abgestützt sind.

Die Erfindung wurde in Verbindung mit einstückigen Aufspannhebeln 9 und 11 erläutert. Es versteht sich jedoch, dass anstelle der einstückigen Aufspannhebel 9 bzw. 11 auch Kniehebel verwendet werden können, wobei das untere Kniehebelstück entweder wie in Fig. 1 oder wie in den Fig. 6 und 7 gezeigt angelenkt ist, während das obere Kniehebelstück über ein Scharnier mit der Zugstange 14 verbunden ist.

## Patentansprüche

1. Fensterrollo (5) für Fensterscheiben (4) von Kraftfahrzeugen, insbesondere für Heckscheiben,
mit einer ortsfest drehbar gelagerten Wickelwelle (8),
mit einer Rollobahn (12), die zwei zueinander parallele Kanten (33) aufweist, von denen eine an der Wickelwelle (8) befestigt ist,
mit einer ersten Antriebseinrichtung, mittels derer die Wickelwelle (8) zumindest in Aufwickelrichtung der Rollobahn (12) betätigbar ist,
mit einer Zugstange (13), die an der anderen Kante (33) der Rollobahn (12) befestigt ist,
mit wenigstens einem Betätigungselement (9,11), das mittels eines Lagers (70) bei der Wickelwelle (8) ortsfest bezüglich einer Achse schwenkbar gelagert ist, die zu der Wickelwelle (8) rechtwinkelig verläuft, und das mittels einer zugeordneten zweiten Antriebseinrichtung (20) aus einer ersten Stellung, in der die Zugstange (13) der Wickelwelle (8) benachbart ist, in eine zweite Stellung zu überführen ist, in der die Zugstange (13) von der Wickelwelle (8) weiter entfernt ist,
mit zwei voneinander beabstandeten Führungselementen (41), die an der Zugstange (13) angebracht sind, um die Zugstange (13) beim Ausfahren auf der Fensterscheibe (4) zu führen, und
mit Mitteln (42), die an der Zugstange (13) angebracht sind und die den Führungselementen (41) in jeder Zwischenstellung des Betätigungselementes (9,11) eine Nachgiebigkeit senkrecht zu der Scheibe (4) verleihen,
wobei die Mittel (42), die dem jeweiligen Führungselement (41) eine Nachgiebigkeit in Richtung senkrecht zu der Scheibe (4) verleihen, eine an der Zugstange (13) angebrachte Lagereinrichtung (43) für das Führungselement (41) und eine Feder (65) umfassen, durch die das Führungselement (41) in Richtung auf die Scheibe (4) vorgespannt ist.

2. Fensterrollo (5) für Fensterscheiben (4) von Kraftfahrzeugen, insbesondere für Heckscheiben,
mit einer ortsfest drehbar gelagerten Wickelwelle (8),
mit einer Rollobahn (12), die zwei zueinander parallele Kanten (33) aufweist, von denen eine an der Wickelwelle (8) befestigt ist,
mit einer ersten Antriebseinrichtung, mittels derer die Wickelwelle (8) zumindest in Aufwickelrichtung der Rollobahn (12) betätigbar ist,
mit einer Zugstange (13), der an der anderen Kante (33) der Rollobahn (12) befestigt ist,
mit wenigstens einem Betätigungselement (9,11), das mittels eines Lagers (70) bei der Wickelwelle (8) ortsfest bezüglich einer Achse schwenkbar gelagert ist, die zu der Wickelwelle (8) rechtwinkelig verläuft, und das mittels einer zugeordneten zweiten Antriebseinrichtung (20) aus einer ersten Stellung, in der die Zugstange (13) der Wickelwelle (8) benachbart ist in eine zweite Stellung zu überführen ist, in der die Zugstange (13) von der Wickelwelle (8) weiter entfernt ist,
mit zwei voneinander beabstandeten Führungselementen (41), die an der Zugstange (13) angebracht sind, um die Zugstange (13) beim Ausfahren auf der Fensterscheibe (4) zu führen, und
mit wenigstens einem Lager (70), das zum Lagern des wenigstens einen Betätigungselements (9,11) einen Zapfen (76), einen Anlagebund (78) und eine von einer Anlagefläche umgebene Bohrung (17) umfasst, durch die der Zapfen (76) hindurchführt, wobei der Zapfen (76) in der Bohrung (17) ein Kippspiel aufweist und der Betätigungshebel (9,11) mittels einer Federeinrichtung (84) gegen den Anlagebund (78) in Richtung auf ein flaches Aufeinanderliegen vorgespannt ist.

3. Fensterrollo nach den Ansprüchen 1 oder 2, **dadurch gekennzeichnet, dass** die Führungselemente (41) Gleitkufen sind.

4. Fensterrollo nach den Ansprüchen 1 oder 2, **dadurch gekennzeichnet, dass** die Führungselemente (41) drehbare Rollen (56) sind, die bezüglich einer Achse drehbar sind, die zumindest angenähert zu einer Ebene parallel verläuft, die von der Scheibe (4) definiert ist, und dass die Achse Parallel zu der Zugstange () verläuft.

5. Fensterrollo nach Anspruch 1, **dadurch gekennzeichnet, dass** zu der Lagereinrichtung ein Gehäuse (43) gehört, das an der Zugstange (13) starr befestigt ist.

6. Fensterrollo nach Anspruch 5, **dadurch gekennzeichnet, dass** in dem Gehäuse (43) ein Träger (53) beweglich gelagert ist, an dem das Führungselement (41) sitzt.

7. Fensterrollo nach Anspruch 6, **dadurch gekennzeichnet, dass** der Träger (53) ein Schieber ist, der in dem Gehäuse (43) verschieblich geführt ist.

8. Fensterrollo nach Anspruch 1, **dadurch gekennzeichnet, dass** die Feder (65) eine Schenkelfeder ist.

9. Fensterrollo nach den Ansprüchen 1 oder 2, **dadurch gekennzeichnet, dass** die Wickelwelle (8) in einem Rahmen (71) gelagert ist, der an der Hutablage (6) des Kraftfahrzeugs zu befestigen ist.

10. Fensterrollo nach den Ansprüchen 1 oder 2, **dadurch gekennzeichnet, dass** eine der Antriebseinrichtungen ein Federantrieb ist.

11. Fensterrollo nach den Ansprüchen 1oder 2, **dadurch gekennzeichnet, dass** die Zugstange (13) und ein Auslaufschlitz (7), durch den die Rollbahn (12) ausgezogen wird, in ihrer Form aufeinander abgestimmt sind, derart, dass die Zugstange (13) bei eingefahrener Rollobahn (12) den Auslaufschlitz (7) vollständig oder bis auf einen um die Zugstange (13) umlaufenden ringförmigen Spalt verschließt.

12. Fensterrollo nach den Ansprüchen 1 oder 2, **dadurch gekennzeichnet, dass** als Betätigungselemente (9,11) zwei neben der Wickelwelle (8) schwenkbar gelagerte Aufspannhebel vorgesehen sind, die mit ihren freien Enden mit der Zugstange (13) zusammenwirken und aus einer Lage, in der sie etwa parallel zu der Wickelwelle (8) verlaufen, in eine Lage schwenkbar sind, in der sie etwa rechtwinkelig zu der Wickelwelle (8) verlaufen.

13. Fensterrollo nach den Ansprüchen 1 oder 2, **dadurch gekennzeichnet, dass** als Betätigungselemente (9,11) zwei neben der Wickelwelle (8) schwenkbar gelagerte Kniehebel vorgesehen sind, die mit ihren freien Enden mit der Zugstange (13) zusammenwirken und aus einer Lage, in der sie im eingeknickten Zustand etwa parallel zu der Wickelwelle (8) liegen, in eine Lage schwenkbar sind, in der sie gestreckt etwa rechtwinkelig zu der Wickelwelle (8) verlaufen.

## Claims

1. Roller blind (5) for window panes (4) of motor vehicles, in particular for rear windows,
with a fixed rotatably disposed winding shaft (8),
with a blind (12), which has two parallel edges (33), one of which is fastened on the winding shaft (8),
with a first drive means, by means of which the winding shaft (8) may be operated at least in the wind-up direction of the blind (12),
with a pull rod (13), which is fastened to the other edge (33) of the blind (12), with at least one operating element (9, 11), which is fixedly disposed by means of a bearing (70) at the winding shaft (8) to swivel with respect to an axis running at right angles to the winding shaft (8), and which is to be moved by means of an associated second drive means (20) from a first position, in which the pull rod (13) is adjacent to the winding shaft (8), into a second position, in which the pull rod (13) is further removed from the winding shaft (8),
with two guide elements (41) attached to the pull rod (13) at a distance from one another in order to guide the pull rod (13) during extension on the window pane (4), and
with means (42), which are attached to the pull rod (13) and provide the guide elements (41) with flexibility perpendicular to the pane (4) in each intermediate position of the operating element (9, 11),
wherein the means (42), which provide the respective guide element (41) with flexibility in the direction perpendicular to the pane (4), comprise a bearing means (43) attached to the pull rod (13) for the guide element (41) and a spring (65), by means of which the guide element (41) is prestressed towards the pane (4).

2. Roller blind (5) for window panes (4) of motor vehicles, in particular for rear windows,
with a fixed rotatably disposed winding shaft (8),
with a blind (12), which has two parallel edges (33), one of which is fastened to the winding shaft (8),
with a first drive means, by means of which the winding shaft (8) may be operated at least in the wind-up direction of the blind (12),
with a pull rod (13), which is fastened to the other edge (33) of the blind (12), with at least one operating element (9, 11), which is fixedly disposed by means of a bearing (70) at the winding shaft (8) to swivel with respect to an axis running at right angles to the winding shaft (8), and which is to be moved by means of an associated second drive means (20) from a first position, in which the pull rod (13) is adjacent to the winding shaft (8), into a second position, in which the pull rod (13) is further removed from the winding shaft (8),
with two guide elements (41) attached to the pull rod (13) at a distance from one another in order to guide the pull rod (13) during extension on the window pane (4), and
with at least one bearing (70), which for support of the at least one operating element (9, 11) has a journal (76), an abutment collar (78) and a hole (17), which is surrounded by an abutment face and through which the journal (76) passes, wherein the journal (76) has tilting clearance in the hole (17) and the operating lever (9, 11) is prestressed by means of a spring means (84) against the abutment collar (78) in the direction of an arrangement where they lie flat on one another.

3. Roller blind according to Claims 1 or 2, **characterised in that** the guide elements (41) are slide runners.

4. Roller blind according to Claims 1 or 2, **characterised in that** the guide elements (41) are rotatable rollers (56), which are rotatable with respect to an axis, which runs at least approximately parallel to a plane defined by the pane (4), and that the axis runs parallel to the pull rod (13).

5. Roller blind according to Claim 1, **characterised in that** forming part of the bearing means is a casing (43), which is fastened rigidly on the pull rod (13).

6. Roller blind according to Claim 5, **characterised in that** a support (53), on which the guide element (41) sits, is movably disposed in the casing (43).

7. Roller blind according to Claim 6, **characterised in that** the support (53) is a slide, which is displaceably arranged in the casing (43).

8. Roller blind according to Claim 1, **characterised in that** the spring (65) is a leg spring.

9. Roller blind according to Claims 1 or 2, **characterised in that** the winding shaft (8) is disposed in a frame (71), which is to be fastened on the window shelf (6) of the motor vehicle.

10. Roller blind according to Claims 1 or 2, **characterised in that** one of the drive means is a spring drive.

11. Roller blind according to Claims 1 or 2, **characterised in that** the pull rod (13) and a run-out slit (7), through which the blind (12) is extended, are adapted in shape to one another such that when the blind (12) is retracted, the pull rod (13) closes the run-out slit (7) completely or except for a ring-shaped gap surrounding the pull rod (13).

12. Roller blind according to Claims 1 or 2, **characterised in that** two clamping levers disposed to swivel next to the winding shaft (8) are provided as operating elements (9, 11), said levers cooperating with the pull rod (13) at their free ends and being capable of swivelling out of a position, in which they run approximately parallel to the winding shaft (8), into a position, in which they run approximately at right angles to the winding shaft (8).

13. Roller blind according to Claims 1 or 2, **characterised in that** two toggle levers disposed to swivel next to the winding shaft (8) are provided as operating elements (9, 11), said levers cooperating with the pull rod (13) at their free ends and being capable of swivelling out of a position, in which in bent state they lie approximately parallel to the winding shaft (8), into a position, in which in extended state they run approximately at right angles to the winding shaft (8).

## Revendications

1. Store pare-soleil (5) pour vitre (4) de véhicules automobiles, en particulier pour lunette arrière,
avec un arbre d'enroulement (8) monté rotatif en un point fixe,
avec un panneau de store (12) présentant deux bords (33) parallèles entre eux, dont l'un est fixé à l'arbre d'enroulement (8),
avec un premier dispositif d'entraînement, au moyen duquel peut être actionné l'arbre d'enroulement (8), au moins dans la direction d'enroulement du panneau de store (12),
avec une tige de traction (13) qui est fixée à l'autre bord (33) du panneau de store (12),
avec au moins un élément d'actionnement (9, 11), fixé à l'aide d'un palier (70) au niveau de l'arbre d'enroulement (8) et pouvant pivoter autour d'un axe qui est perpendiculaire à l'arbre d'enroulement (8) et qui peut être déplacé par un second dispositif d'entraînement (20) correspondant entre une première position, dans laquelle la tige de traction (13) est voisine de l'arbre d'enroulement (8), et une seconde position, dans laquelle la tige de traction (13) est plus éloignée de l'arbre d'enroulement (8),
avec deux éléments de guidage (41) écartés l'un de l'autre, disposés sur la tige de traction (13), afin de guider la tige de traction (13) sur la vitre (4) lors du déroulement, et
avec des moyens (42) disposés sur la tige de traction (13) et conférant aux éléments de guidage (41), dans toutes les positions intermédiaires de l'élément d'actionnement (9, 11) une flexibilité perpendiculairement à la vitre,
dans lequel les moyens (42) qui confèrent aux différents éléments de guidage (41) une flexibilité dans la direction perpendiculaire à la vitre (4) comprennent un dispositif de montage (43) de l'élément de guidage (41), disposé sur la tige de traction (13), et un ressort (65) par lequel l'élément de guidage (41) est précontraint dans la direction de la vitre (4).

2. Store pare-soleil (5) pour vitre (4) de véhicules automobiles, en particulier pour lunette arrière,
avec un arbre d'enroulement (8) monté rotatif en un point fixe,
avec un panneau de store (12) présentant deux bords (33) parallèles entre eux, dont l'un est fixé à l'arbre d'enroulement (8),
avec un premier dispositif d'entraînement, au moyen duquel peut être actionné l'arbre d'enroulement (8), au moins dans la direction d'enroulement du panneau de store (12),
avec une tige de traction (13) qui est fixée à l'autre bord (33) du panneau de store (12),
avec au moins un élément d'actionnement (9, 11), fixé à l'aide d'un palier (70) au niveau de l'arbre d'enroulement (8) et pouvant pivoter autour d'un axe qui est perpendiculaire à l'arbre d'enroulement (8) et qui peut être déplacé par un second dispositif d'entraînement (20) correspondant entre une première position, dans laquelle la tige de traction (13) est voisine de l'arbre d'enroulement (8), et une seconde position, dans laquelle la tige de traction (13) est plus éloignée de l'arbre d'enroulement (8),
avec deux éléments de guidage (41) écartés l'un de l'autre, disposés sur la tige de traction (13), afin de guider la tige de traction (13) sur la vitre (4) lors du déroulement, et
avec au moins un palier (70) qui, pour recevoir l'élément d'actionnement (9, 11) au moins unique, comprend un tourillon (76), une collerette d'appui (78) et un alésage (17) entouré d'une surface d'appui, au travers duquel passe le tourillon (76), le tourillon (76) présentant dans l'alésage (17) un jeu de basculement et le levier d'actionnement (9, 11) étant précontraint par un dispositif à ressort (84) contre la collerette d'appui (78) dans la direction correspondant à un appui à plat.

3. Store pare-soleil selon les revendications 1 ou 2, **caractérisé en ce que** les éléments de guidage (41) sont des patins.

4. Store pare-soleil selon les revendications 1 ou 2, **caractérisé en ce que** les éléments de guidage (41) sont des galets rotatifs (56) qui peuvent tourner autour d'un axe qui est au moins approximativement parallèle à un plan qui est défini par la vitre (4) et **en ce que** l'axe est parallèle à la tige de traction (13).

5. Store pare-soleil selon la revendication 1, **caractérisé en ce que** le dispositif de montage comprend un boîtier (43) qui est solidaire de la tige de traction (13).

6. Store pare-soleil selon la revendication 5, **caractérisé en ce que** le boîtier (43) abrite un support (53) monté mobile sur lequel repose l'élément de guidage (41).

7. Store pare-soleil selon la revendication 6, **caractérisé en ce que** le support (53) est un coulisseau qui est guidé coulissant dans le boîtier (43).

8. Store pare-soleil selon la revendication 1, **caractérisé en ce que** le ressort (65) est un ressort à branches.

9. Store pare-soleil selon les revendications 1 ou 2, **caractérisé en ce que** l'arbre d'enroulement (8) est monté dans un bâti (71) qui doit être fixé sur la plage arrière (6) du véhicule automobile.

10. Store pare-soleil selon les revendications 1 ou 2, **caractérisé en ce que** l'un des dispositifs d'entraînement est un entraînement à ressort.

11. Store pare-soleil selon les revendications 1 ou 2, **caractérisé en ce que** la tige de traction (13) et une fente de déroulement (7), au travers de laquelle le panneau de store (12) est déroulé, sont adaptés l'une à l'autre dans leurs formes afin que la tige de traction (13), lorsque le panneau de store (12) est enroulé, obture la fente de déroulement (7), totalement ou hormis une fente annulaire circonscrivant la tige de traction (13).

12. Store pare-soleil selon les revendications 1 ou 2, **caractérisé en ce qu'**il est prévu comme éléments d'actionnement (9, 11) deux leviers de tension montés pivotants près de l'arbre d'enroulement (8), qui coopèrent par leurs extrémités libres avec la tige de traction (13) et qui peuvent pivoter entre une position dans laquelle ils sont sensiblement parallèles à l'arbre d'enroulement (8) et une position dans laquelle ils sont sensiblement perpendiculaires à l'arbre d'enroulement (8).

13. Store pare-soleil selon les revendications 1 ou 2, **caractérisé en ce qu'**il est prévu comme éléments d'actionnement (9, 11) deux leviers à genouillère montés pivotants près de l'arbre d'enroulement (8), qui coopèrent par leurs extrémités libres avec la tige de traction (13) et qui peuvent pivoter entre une position dans laquelle ils sont repliés et sensiblement parallèles à l'arbre d'enroulement (8) et une position dans laquelle ils sont redressés et sensiblement perpendiculaires à l'arbre d'enroulement (8).
